# EUROPÄISCHE PATENTSCHRIFT

(11) **EP 3 521 857 B1**
(45) Veröffentlichungstag und Bekanntmachung des Hinweises auf die Patenterteilung: **28.06.2023**
(21) Anmeldenummer: 19154193.7
(22) Anmeldetag: 29.01.2019
(51) Int. Cl.: G01S 15/93, G01S 15/58

(54) **OBJEKTERFASSUNG MIT ULTRASCHALLSENSOREN BEI ZYKLISCHEN LUFTDRUCKÄNDERUNGEN**
OBJECT DETECTION WITH ULTRASOUND SENSORS FOR IN CYCLICAL AIR PRESSURE CHANGES
DÉTECTION DE L'OBJET À L'AIDE DES CAPTEURS ULTRASONORES LORS DES CHANGEMENTS CYCLIQUES DE LA PRESSION D'AIR

(30) Priorität: 05.02.2018 DE 102018102437
(43) Veröffentlichungstag der Anmeldung: 07.08.2019
(73) Patentinhaber: Valeo Schalter und Sensoren GmbH, 74321 Bietigheim-Bissingen (DE)
(72) Erfinder: HAMM, Wolfgang, 74321 Bietigheim-Bissingen (DE); DHEERENDRA JAYA, Akhil, 74321 Bietigheim-Bissingen (DE); BOU SALEH, Paul, 74321 Bietigheim-Bissingen (DE); HAERING, Felix, 74321 Bietigheim-Bissingen (DE)
(74) Vertreter: Enge, Sebastian

(56) Entgegenhaltungen:
- DE-A1-102004 060 065
- DE-A1-102012 200 230
- DE-A1-102012 214 047
- US-B1- 6 563 761

## Beschreibung

Die vorliegende Erfindung betrifft ein Verfahren zur Ansteuerung eines Ultraschallsensors für ein Fahrzeug, insbesondere zur Anbringung in einer Aussparung eines Verkleidungsteils des Fahrzeugs, angegeben, wobei der Ultraschallsensor eine Ultraschallmembran zum Aussenden und Empfangen von Ultraschallsignalen aufweist.

Auch betrifft die vorliegende Erfindung ein Fahrunterstützungssystem für ein Fahrzeug mit wenigstens einem Ultraschallsensor, wobei das Fahrunterstützungssystem ausgeführt ist, den wenigstens einen Ultraschallsensor gemäß dem obigen Verfahren anzusteuern.

In aktuellen Fahrzeugen werden Ultraschallsensoren verwendet, um Objekte in einer Umgebung des Fahrzeugs zu detektieren. Ultraschallsensoren decken dabei typischerweise einen Nahbereich von wenigen Metern um das Fahrzeug ab. Zur vollständigen Erfassung der Umgebung werden meist eine Mehrzahl Ultraschallsensoren entlang aller Fahrzeugseiten positioniert und gemeinsam ausgewertet.

Sensorinformationen der Ultraschallsensoren können in verschiedenen Fahrunterstützungssystemen Verwendung finden. Fahrunterstützungssysteme umfassen bereits heute weit verbreitete Fahrerassistenzsysteme, die einen Fahrzeugführer beim Führen des Fahrzeugs unterstützen. Solche Fahrerassistenzsysteme umfassen beispielsweise Parkassistenzsysteme oder Abstandswarnsysteme, die typischerweise bei niedrigen Geschwindigkeiten aktiv sind, sowie zunehmend Assistenzsysteme, die typischerweise das Fahren bei höheren Geschwindigkeiten unterstützen, beispielsweise Spurwechselassistenzsysteme und Totwinkel-Assistenzsysteme.

Ausgehend von den ersten Anwendungen von Ultraschallsensoren bei niedrigen Geschwindigkeiten werden Ultraschallsensoren sowie beispielsweise deren Halter typischerweise für niedrige Geschwindigkeiten unter Berücksichtigung von Aerodynamikanforderungen und Designanforderungen des Fahrzeugs designt und in das Fahrzeug integriert. Die Integration wird weiterhin für niedrige Geschwindigkeiten durchgeführt. Hierbei handelt es sich typischerweise um Geschwindigkeiten im niedrigen zweistelligen Bereich, beispielsweise bis zu 30 oder 40 km/h.

Bei den Fahrunterstützungssystemen ergeben sich jedoch zunehmend Erweiterungen durch Anwendungen im Hochgeschwindigkeitsbereich. Hochgeschwindigkeitsfahren betrifft ein Fahren mit einer Geschwindigkeit, die typisch für Landstraßen und insbesondere Autobahnen ist, beispielsweise über 60 bis 80 km/h oder über 100 km/h. Prinzipiell betrifft das Hochgeschwindigkeitsfahren aber alle Fahrten, die nicht von den typischen Niedergeschwindigkeitsanwendungen abgedeckt werden.

Dabei hat sich als problematisch herausgestellt, dass sich entlang der Verkleidung des Fahrzeugs turbulente Umströmungen bilden können, insbesondere in einen vorderen und einem hinteren Bereich des Fahrzeugs. Damit treten die turbulenten Umströmungen auch im Bereich der Stoßfänger auf, die ein typischer Einbauort für die Ultraschallsensoren sind, und dort Probleme erzeugen.

Durch die turbulenten Umströmungen des Fahrzeugs und seiner Verkleidungsteile können sich im Bereich der Verbauorte der Ultraschallsensoren starke lokale Geschwindigkeits- und Druckänderungen ergeben. Dabei kommt es zu turbulentem Verhalten in einer Luftgrenzschicht über der Ultraschallmembran. Diese Turbulenzeffekte sorgen für zeitlich variierende lokale Druckschwankungen an der Sensormembrane, die Geister-Echos erzeugen, d.h. die Ultraschallmembran des Ultraschallsensors wird durch die Turbulenzen mit einer Ultraschallfrequenz angeregt, so dass der Sensor ein Signal wie bei einer Reflektion eines Ultraschallpulses an einem Objekt wahrnehmen kann. Diese Turbulenzen können "echte" Reflektion von Ultraschallpulsen überlagern und diese unsichtbar machen. Darüber hinaus wird auch das Aussenden der Ultraschallpulse mit dem Ultraschallsensor gestört. Insgesamt ergibt sich eine schlechte Detektion von Objekten und anderen Hindernissen beim Fahren mit hohen Geschwindigkeiten.

Die Turbulenzen sind bei unterschiedlichen Fahrzeugen jeweils unterschiedlich ausgeprägt, beispielsweise abhängig von einer Geometrie des Fahrzeugs, einem lokalen Einbauort der Ultraschallsensoren, oder anderen. Darüber hinaus hängen die Turbulenzen von verschiedenen Parametern ab, beispielsweise einer Fahrzeuggeschwindigkeit und Umgebungsbedingungen wie Temperatur, Luftfeuchte und Luftdichte.

Die Fahrunterstützungssysteme können auch in autonomen Fahrzeugen entsprechende Funktionen bereitstellen, um eine autonome Führung des Fahrzeugs zu unterstützen.

In diesem Zusammenhang ist aus der DE 10 2004 020 423 A1 ein Verfahren zur Erkennung von fiktiven Hindernissen bei Abstandsmessungen eines Kraftfahrzeuges aufgrund von Reflektionen eines Messmediums an kraftfahrzeugeigenen Teilen bekannt. Das Verfahren umfasst ein Bestimmen von Echobandbereichen, welche jeweils Echosignalen eines aus zwei Sensoreinrichtungen bestehenden Sensorpaares zugeordnet werden und in welchen die den Echosignalen zugeordneten Abstandswerte von etwaigen fiktiven Hindernissen auftreten können; ein Bestimmen von Grenzwerten, welche jeweils einem Echobandbereich der einzelnen Echosignale des Sensorpaares zugeordnet werden; ein Aussenden von Sendesignalen des Messmediums durch die zwei Sensoreinrichtungen des Sensorpaares; ein Empfangen der reflektierten Echosignale des Messmediums durch die zwei Sensoreinrichtungen des Sensorpaares; ein Überprüfen eines Auftretens eines ersten Echosignals der Echosignale des Sensorpaares innerhalb des dem ersten Echosignal zugeordneten Echobandbereiches; Überprüfen eines Auftretens mindestens eines der übrigen Echosignale des Sensorpaares unterhalb der jeweils zugeordneten Grenzwerte der den übrigen Echosignalen zugeordneten Echobandbereiche für den Fall eines Auftretens des ersten Echosignals innerhalb des dem ersten Echosignal zugeordneten Bandbereiches; und ein Erkennen eines fiktiven Hindernisses für den Fall eines Nicht-Auftretens der übrigen Echosignale des Sensorpaares unterhalb der jeweils zugeordneten Grenzwerte der den übrigen Echosignalen jeweils zugeordneten Echobandbereiche.

Aus der DE 10 2015 106 934 A1 ist ein Verfahren zum Bestimmen einer Dämpfung eines Ultraschallsignals eines Ultraschallsensors für ein Kraftfahrzeug in einem Umgebungsbereich des Kraftfahrzeugs bekannt, wobei bei dem Verfahren mittels eines fahrzeugseitigen Temperatursensors eine aktuelle Temperatur in dem Umgebungsbereich des Kraftfahrzeugs erfasst wird, wobei eine aktuelle Position des Kraftfahrzeugs erfasst wird, anhand der aktuellen Position aus bereitgestellten Wetterdaten eine aktuelle Luftfeuchtigkeit in dem Umgebungsbereich des Kraftfahrzeugs bestimmt wird und anhand der aktuellen Luftfeuchtigkeit und der aktuellen Temperatur die Dämpfung des Ultraschallsignals in dem Umgebungsbereich bestimmt wird.

Weiterhin ist aus der DE 10 2012 001 649 A1 ein Verfahren zur Ermittlung der Geschwindigkeit des auf ein Kraftfahrzeug wirkenden Seitenwinds bekannt. Dabei wird von einem an dem Kraftfahrzeug angebrachten Ultraschallsender ein Ultraschallsignal ausgesandt, das von einem mit Abstand von dem Ultraschallsender an dem Kraftfahrzeug angebrachten Ultraschallempfänger empfangen wird. Aus der Zeit, die das Ultraschallsignal von dem Ultraschallsender zu dem Ultraschallempfänger benötigt, wird die Geschwindigkeit des Seitenwinds berechnet. Ähnliche Verfahren sind auch aus der DE 10 2010 008 079 A1 und der DE 10 2009 003 257 A1 bekannt.

Die DE 10 2014 106 008 A1 beschreibt ein Verfahren zum Betreiben einer Ultraschallsensorvorrichtung eines Kraftfahrzeugs, bei welchem durch zumindest einen Ultraschallsensor der Ultraschallsensorvorrichtung Ultraschallwellen in einen Umgebungsbereich des Kraftfahrzeugs zum Durchführen einer Abstandsmessung ausgesendet werden, wobei anhand von Sensordaten zumindest eines von dem Ultraschallsensor verschiedenen Sensors des Kraftfahrzeugs eine von einer Auspuffanlage des Kraftfahrzeugs in den Umgebungsbereich ausgegebene Abgaswolke, an welcher die Ultraschallwellen reflektiert werden, durch die Ultraschallsensorvorrichtung detektiert wird und das Betreiben der Ultraschallsensorvorrichtung abhängig von der Detektion der Abgaswolke erfolgt.

Aus der DE 10 2005 013 589 A1 ist zusätzlich ein Verfahren zur Funktionsprüfung eines Ultraschallsensors bekannt, bei dem wenigstens ein weiterer Ultraschallsensor ein Ultraschallsignal aussendet und ein Funktionieren des ersten Sensors dann festgestellt wird, wenn die Amplitude des von dem ersten Sensor ohne eine Reflexion an einem externen Hindernis übertragenen Signals einen vorgegebenen, veränderlichen Grenzwert überschreitet.

Die WO 2005 015 260 A1 betrifft ein Verfahren und eine Vorrichtung zur Detektion von sich in annähernd gleicher Raumrichtung zu einem Fahrzeug bewegenden Objekten, mit dem ein Vorhandensein von Objekten im Toten Winkel eines Fahrzeugs vor allem bei hohen Fahrgeschwindigkeiten und/oder Relativgeschwindigkeiten zwischen dem Objekt und dem Fahrzeug detektiert werden kann. Es werden der Luftdruck und/oder ein Schallsignal an mindestens einem Punkt des Fahrzeugs über ein vorgegebenes Zeitintervall oder vorgegebene Zeitintervalle detektiert, und die Position des Objekts oder der Objekte relativ zum Fahrzeug wird durch Auswertung des Signalverlaufs oder der Signalverläufe des Luftdrucks und/oder des Schallsignals bestimmt. Dadurch kann insbesondere bei hohen Fahrgeschwindigkeiten größer als 30 km/h eine sichere und kostengünstige Detektion von im Toten Winkel befindlichen Objekten realisiert werden.

Aus der DE 102012200230 A1 ist eine Möglichkeit zur Erhöhung der Genauigkeit der Ultraschallmessung bekannt. Es wird dabei die Klimasituation im Umfeld des Fahrzeugs berücksichtigt, die eine Einfluss auf die Messergebnisse der Ultraschallsensoren haben.

Dabei wird insbesondere die Windstärke, die Windrichtung, die Temperatur und die Luftfeuchtigkeit berücksichtigt, um die gemessene Abstandswerte zu korrigieren.

Ausgehend von dem oben genannten Stand der Technik liegt der Erfindung somit die Aufgabe zugrunde, ein Verfahren zur Ansteuerung eines Ultraschallsensors für ein Fahrzeug sowie ein Fahrunterstützungssystem für ein Fahrzeug zur Ansteuerung von Ultraschallsensoren gemäß dem obigen Verfahren anzugeben, die eine verbesserte Bereitstellung von Sensorinformationen beim Fahren des Fahrzeugs, insbesondere beim Hochgeschwindigkeitsfahren, und eine zuverlässige Erfassung von Objekten in einem Erfassungsbereich des Ultraschallsensors ermöglichen.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist somit ein Verfahren zur Ansteuerung eines Ultraschallsensors für ein Fahrzeug, der in einer Aussparung eines Verkleidungsteils des Fahrzeugs angebracht ist, angegeben, wobei der Ultraschallsensor eine Ultraschallmembran zum Aussenden und Empfangen von Ultraschallsignalen aufweist, umfassend die Schritte Überwachen von Luftdruckänderungen im Bereich der Ultraschallmembran, Identifizieren einer zyklischen Luftdruckänderung in den Luftdruckänderungen, und Anpassen einer Erfassung von Objekten mit dem Ultraschallsensor basierend auf der zyklischen Luftdruckänderung.

Erfindungsgemäß ist außerdem ein Fahrunterstützungssystem für ein Fahrzeug mit wenigstens einem Ultraschallsensor angegeben, wobei das Fahrunterstützungssystem ausgeführt ist, den wenigstens einen Ultraschallsensor gemäß dem obigen Verfahren anzusteuern.

Grundidee der vorliegenden Erfindung ist es also, Luftdruckänderungen unmittelbar im Bereich jedes Ultraschallsensors zu erfassen, um damit für jeden Ultraschallsensor die Erfassung von Objekten anpassen zu können. Dadurch kann für jeden der Ultraschallsensoren individuell eine Optimierung durchgeführt werden. Dadurch können turbulente Umströmungen des Fahrzeugs und seiner Verkleidungsteile, die sich jeweils individuell im Bereich jedes Ultraschallsensors ausbilden können, sowie daraus resultierende lokale Geschwindigkeits- und Druckänderungen ausgeglichen werden. Auch können Geister-Echos vermieden bzw. gefiltert werden, und eine Erkennung von Objekten und anderen Hindernissen kann insgesamt verbessert werden.

Der Ultraschallsensor kann als solcher unterschiedlich ausgeführt sein, beispielsweise mit einem im Wesentlichen topfförmigen Membrangehäuse, wobei die Ultraschallmembran in einem Bodenbereich davon ausgebildet ist. Die Anbringung in der Aussparung des Verkleidungsteils des Fahrzeugs bewirkt, dass die Ultraschallmembran unmittelbar den Turbulenzen entlang der Verkleidung des Fahrzeugs ausgesetzt ist. Dabei ist die Ultraschallmembran typischerweise ungeschützt angeordnet, so dass die Turbulenzen direkt darauf einwirken können.

An die Ultraschallmembran ist typischerweise ein Piezoelement angekoppelt, um Ultraschallimpulse zu erzeugen und deren Reflektionen zu empfangen und in elektrische Signale umzusetzen.

Die zyklischen Luftdruckänderungen können insbesondere einen Frequenzbereich im Arbeitsbereich des Ultraschallsensors betreffen. Allerdings können auch zyklische Luftdruckänderungen mit anderen Frequenzen störend auf den Ultraschallsensor wirken. Die zyklischen Luftdruckänderungen werden nachfolgend auch als Turbulenzen bezeichnet.

Die zyklischen Luftdruckänderungen können als solche erfasst werden. Eine Erfassung von absoluten Drücken ist nicht erforderlich, wodurch eine einfache Signalerfassung und Signalverarbeitung durchgeführt werden kann.

In vorteilhafter Ausgestaltung der Erfindung umfasst der Schritt des Überwachens von Luftdruckänderungen im Bereich der Ultraschallmembran ein Überwachen der Luftdruckänderungen mit dem Ultraschallsensor. Der Ultraschallsensor selber kann also verwendet werden, um die Luftdruckänderungen zu erfassen. Die Luftdruckänderungen bewirken eine Auslenkung der Ultraschallmembran, die von dem jeweiligen Ultraschallsensor erfasst und ausgewertet werden kann. Die Erfassung mit dem Ultraschallsensor selber ermöglicht eine Überwachung von Luftdruckänderungen unmittelbar an der besonders relevanten Position der Ultraschallmembran, so dass praktisch keine oder nur eine minimale Messverzögerung zu berücksichtigen ist. Dadurch werden adaptive Anpassungen der Erfassung von Objekten mit dem Ultraschallsensor ermöglicht, da hier eine exakte Kenntnis der Luftdruckänderungen erforderlich ist.

In vorteilhafter Ausgestaltung der Erfindung umfasst das Verfahren zusätzliche Schritte zum Erfassen eines Luftdrucks im Bereich der Ultraschallmembran und zum Ermitteln der Luftdruckänderungen im Bereich der Ultraschallmembran aus einem Verlauf des Luftdrucks im Bereich der Ultraschallmembran. Um die zyklischen Luftdruckänderungen in dem Verlauf des Luftdrucks zu ermitteln, sind verschiedene Verfahren als solche bekannt, die auf einer Frequenzanalyse des erfassten Luftdrucks basieren.

In vorteilhafter Ausgestaltung der Erfindung der Schritt des Anpassens einer Erfassung von Objekten mit dem Ultraschallsensor basierend auf der zyklischen Luftdruckänderung ein Filtern der Erfassung von Objekten basierend auf der zyklischen Luftdruckänderung. Es kann als einfache Art des Filterns beispielsweise eine Schwelle definiert werden, sodass empfangene Signale nur einem Objekt zugeordnet werden, wenn ein Signalpegel oberhalb des Schwellwerts erreicht wurde. Der Schwellwert kann beispielsweise angewendet werden, sobald eine entsprechende zyklische Luftdruckänderung identifiziert wurde. Der Schwellwert kann insbesondere als adaptive Schwelle ausgeführt sein, um abhängig von einer konkreten Form der zyklischen Luftdruckänderung den Schwellwert anpassen zu können, beispielsweise ein niedriger Schwellwert bei geringen Turbulenzen und ein hoher Schwellwert bei starken Turbulenzen.

In vorteilhafter Ausgestaltung der Erfindung umfasst der Schritt des Filterns der Erfassung von Objekten basierend auf der zyklischen Luftdruckänderung ein parametrisieren von Filterparametern. Somit kann ein Filter genau an vorliegende Turbulenzen angepasst werden. Filterparameter können beispielsweise einen Frequenzverlauf oder einen Pegel betreffen.

In vorteilhafter Ausgestaltung der Erfindung umfasst der Schritt des Filterns der Erfassung von Objekten basierend auf der zyklischen Luftdruckänderung ein Filtern der Erfassung von Objekten mit zeitlich variierenden Schwellwerten für die Erfassung von Objekten. Durch die zeitlich variierenden Schwellwerte können nicht nur abhängig von der Art und Intensität der Turbulenzen die Schwellwerte angepasst werden, sondern sogar abhängig von einem Amplituden und/oder Frequenzverlauf der daraus resultierenden Geistersignale an dem Ultraschallsensor. So kann beispielsweise bei einem Nulldurchgang der Luftdruckänderung, d.h. wenn der aktuelle Luftdruck einem Mittelwert oder einem Normalwert entspricht, der Schwellwert auf ,Null' gesetzt werden, und entsprechend mit einer zunehmenden Luftdruckänderung angepasst werden. Die zeitlich variierenden Schwellwerte werden vorzugsweise unter zusätzlicher Berücksichtigung einer Bewegungsgeschwindigkeit des Fahrzeugs angewendet. Die Bewegungsgeschwindigkeit des Fahrzeugs ist maßgeblich für die Entstehung der zyklischen Luftdruckänderung und deren jeweilige Ausprägung. Durch die Bewegungsgeschwindigkeit des Fahrzeugs kann die Erfassung der zyklischen Luftdruckänderung verbessert oder sogar antizipiert werden. Die Bewegungsgeschwindigkeit des Fahrzeugs kann beispielsweise aus Odometriesignalen des Fahrzeugs oder von dem Fahrzeug empfangenen Satellitenpositionssignalen bestimmt werden.

Erfindungsgemäß umfasst das Verfahren einen zusätzlichen Schritt zum Überwachen einer Bewegungsgeschwindigkeit des Fahrzeugs, und der Schritt des Anpassens einer Erfassung von Objekten mit dem Ultraschallsensor basierend auf der zyklischen Luftdruckänderung erfolgt unter zusätzlicher Berücksichtigung der Bewegungsgeschwindigkeit des Fahrzeugs. Die Bewegungsgeschwindigkeit ist ein dynamischer Faktor mit großer Relevanz für das Auftreten von Turbulenzen im Bereich der Ultraschallmembran. Die Bewegungsgeschwindigkeit kann dabei insbesondere eine Frequenz von auf Turbulenzen basierenden Geister-Echos beeinflussen, so dass bei Kenntnis der Bewegungsgeschwindigkeit das Anpassen der Erfassung von Objekten mit dem Ultraschallsensor sehr zuverlässig durchgeführt werden kann. Die Bewegungsgeschwindigkeit kann beispielsweise basierend auf Odometriedaten oder Satellitenpositionsdaten erfasst werden.

Erfindungsgemäß umfasst der Schritt des Anpassens einer Erfassung von Objekten mit dem Ultraschallsensor basierend auf der zyklischen Luftdruckänderung ein Einstellen eines Sendeverhaltens und eines Empfangsverhaltens des Ultraschallsensors basierend auf der zyklischen Luftdruckänderung. So kann beispielsweise das Sendeverhalten geändert werden, indem Ultraschallpulse zeitlich so terminiert werden, dass sie bei einem Minimum der durch die Turbulenzen hervorgerufenen Störungen abgestrahlt werden. Beim Empfangsverhalten kann eine Anpassung erfolgen, indem durch die Turbulenzen hervorgerufenen Störungen vorhergesagt werden, und die Erfassung der Objekte entsprechend angepasst wird. Dabei können Abstände von erfassten Objekten und Signallaufzeiten der Ultraschallpulse berücksichtigt werden. Es kann eine adaptive Anpassung des zeitlichen Sendeverhaltens wie auch des Empfangsverhaltens erfolgen, d.h. quasi in Echtzeit, um Ultraschallpulse möglichst optimal zu senden und zu empfangen.

In vorteilhafter Ausgestaltung der Erfindung umfasst das Verfahren einen zusätzlichen Schritt zum Überwachen von Umgebungsbedingungen, und der Schritt des Anpassens einer Erfassung von Objekten mit dem Ultraschallsensor basierend auf der zyklischen Luftdruckänderung erfolgt unter zusätzlicher Berücksichtigung der Umgebungsbedingungen. Die Umgebungsbedingungen umfassen beispielsweise eine Umgebungstemperatur, eine Luftfeuchte, Niederschlag und eine Luftdichte. Durch die Umgebungsbedingungen werden beispielsweise Signallaufzeiten der abgestrahlten Ultraschallpulse beeinflusst. Teilweise können die Umgebungsbedingungen auch einen Einfluss auf fehlerhafte Objekterkennungen haben, beispielsweise durch Regentropfen oder Gischt.

In vorteilhafter Ausgestaltung der Erfindung umfasst das Verfahren zur Ansteuerung eines Ultraschallsensors für ein Fahrzeug eine Ansteuerung des Ultraschallsensors für Hochgeschwindigkeitsfahren. Insbesondere bei Hochgeschwindigkeitsfahrten steigt die Wahrscheinlichkeit für das Auftreten von zyklischen Luftdruckänderungen durch Turbulenzen im Bereich der Ultraschallmembran. Bei Niedergeschwindigkeitsanwendungen, beispielsweise beim Parken des Fahrzeugs, ist dagegen eher nicht mir Geister-Echos durch Turbulenzen zu rechnen. Hochgeschwindigkeitsfahren betrifft ein Fahren mit einer Geschwindigkeit, die typisch für Landstraßen und insbesondere Autobahnen ist, beispielsweise über 60 bis 80 km/h oder über 100 km/h. Prinzipiell betrifft das Hochgeschwindigkeitsfahren aber alle Fahrten, die nicht von den typischen Niedergeschwindigkeitsanwendungen abgedeckt werden.

In vorteilhafter Ausgestaltung der Erfindung ist das Fahrunterstützungssystem ausgeführt, eine Totwinkelüberwachung und/oder eine Spurwechselüberwachung und/oder eine Seitenabstandsüberwachung durchzuführen. Derartige Fahrunterstützungssysteme helfen beim Fahren des Fahrzeugs in Fahrsituationen, wie sie typischerweise beim Hochgeschwindigkeitsfahren auftreten. Dabei kann die Unterstützung sowohl beim autonomen Fahren, d.h. bei einem Fahren ohne Eingriff von Fahrzeuginsassen, wie auch beim assistierten Fahren, bei dem ein Fahrer des Fahrzeugs unterstützt wird, angewendet werden. Im letzten Fall wird typischerweise von einem Fahrerassistenzsystem gesprochen.

Nachfolgend wird die Erfindung unter Bezugnahme auf die anliegende Zeichnung anhand bevorzugter Ausführungsformen näher erläutert. Die dargestellten Merkmale können sowohl jeweils einzeln als auch in Kombination einen Aspekt der Erfindung darstellen. Merkmale verschiedener Ausführungsbeispiele sind übertragebar von einem Ausführungsbeispiel auf ein anderes.

Es zeigt
- Fig. 1: eine schematische Ansicht eines Ultraschallsensor für ein Fahrzeug, der in einer Aussparung eines Verkleidungsteils des Fahrzeugs angebracht ist, gemäß einer ersten Ausführungsform in einer seitlichen Schnittansicht,
- Fig. 2: eine Ansicht des Ultraschallsensors aus Fig. 1 mit Verwirbelungen in einer perspektivischen Ansicht, und
- Fig. 3: ein Ablaufdiagramm eines Verfahrens zur Ansteuerung eines Ultraschallsensors gemäß einer zweiten, bevorzugten Ausführungsform.

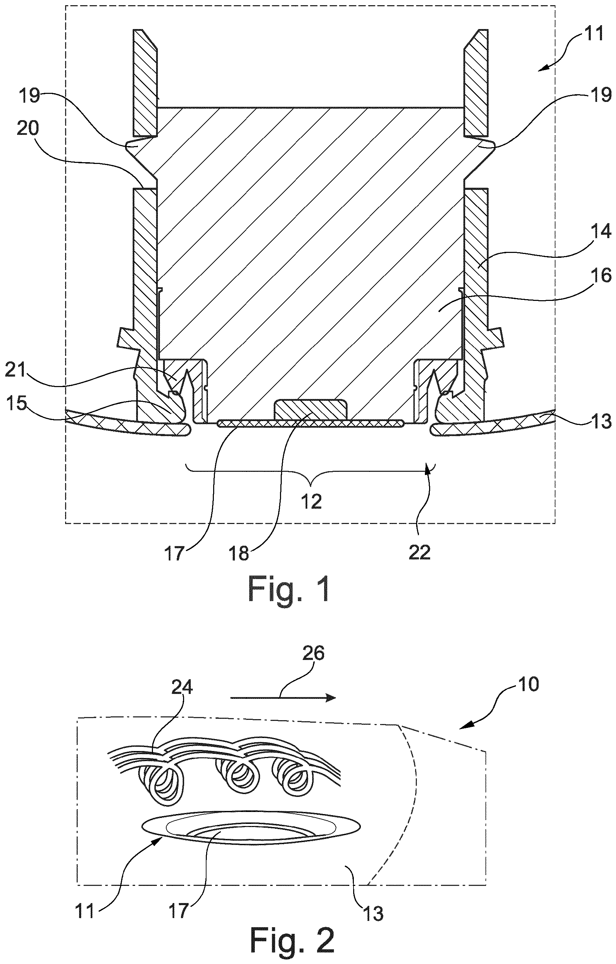

Die Figuren 1 und 2 zeigen eine Anordnung 10 mit einem Ultraschallsensor 10 und einem Verkleidungsteil 13 eines nicht weiter dargestellten Fahrzeugs gemäß einer ersten Ausführungsform. Der Ultraschallsensor 11 ist in einer Aussparung 12 des Verkleidungsteils 13 angebracht. Das Verkleidungsteil 13 ist aus Kunststoff hergestellt.

Der Ultraschallsensor 11 umfasst einen Halter 14, mit dem der Ultraschallsensor 11 an dem Verkleidungsteil 13 angebracht ist. Der Halter 14 ist aus einem Kunststoff hergestellt und hülsenförmig ausgeführt. An seiner dem Verkleidungsteil 13 zugewandten Ende weist der Halter 14 eine Verdickung 15 auf, mit der der Halter 14 an dem Verkleidungsteil 13 befestigt ist. Der Halter 14 ist in diesem Ausführungsbeispiel durch ein Kunststoffschweißverfahren oder durch Kleben an dem Verkleidungsteil 13 angebracht.

Der Ultraschallsensor 11 umfasst weiterhin ein topfförmiges Membrangehäuse 16 mit einer in einem Bodenbereich davon ausgebildeten Ultraschallmembran 17. An die Ultraschallmembran 17 ist ein Piezoelement 18 angekoppelt, um Ultraschallimpulse zu erzeugen und deren Reflektionen zu empfangen und in elektrische Signale umzusetzen. Das Piezoelement 18 ist dazu innenseitig in dem topfförmigen Membrangehäuse 16 an der Ultraschallmembran 17 festgeklebt. Das topfförmige Membrangehäuse 16 ist in diesem Ausführungsbeispiel auf nicht dargestellte Weise rückseitig verschlossen oder mit einem aushärtenden Material, beispielsweise Kunstharz, ausgegossen.

Das topfförmige Membrangehäuse 16 weist einen kreisförmigen Querschnitt auf und ist innenseitig in dem Halter 14 aufgenommen. Zur Fixierung in dem Halter 14 umfasst das topfförmige Membrangehäuse 16 seitliche Nasen 19, die mit Öffnungen 20 des Halters 14 korrespondieren.

Der Ultraschallsensor 11 umfasst zusätzlich einen Entkopplungsring 21, der das Membrangehäuse 16 an dessen Bodenbereich ringförmig umgibt und die Ultraschallmembran 17 schwingungstechnisch von dem Verkleidungsteil 13 entkoppelt. Der Entkopplungsring 21 erstreckt sich dabei über einen Spalt 22 zwischen dem Membrangehäuse 16 und dem Verkleidungsteil 13. Beim Fahren des Fahrzeugs, insbesondere beim Hochgeschwindigkeitsfahren, wird in dem Bereich oberhalb der Ultraschallmembran 17 eine Verwirbelung 24 erzeugt, wie beispielhaft Figur 2 dargestellt ist.

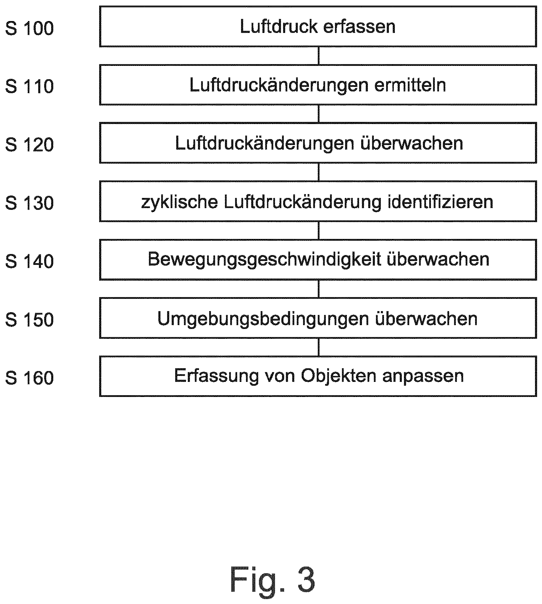

Nachstehend wird unter Bezug auf Fig. 3 ein Verfahren zur Ansteuerung des Ultraschallsensors 11 für ein Fahrzeug gemäß einer zweiten, bevorzugten Ausführungsform erläutert. Das Verfahren ist dabei zur Ansteuerung des Ultraschallsensors 11 für Hochgeschwindigkeitsfahren ausgebildet. Hochgeschwindigkeitsfahren betrifft hier beispielhaft ein Fahren mit einer Geschwindigkeit, die typisch für Landstraßen und insbesondere Autobahnen ist, beispielsweise über 60 bis 80 km/h oder über 100 km/h. bei dem sich im Bereich der Ultraschallmembran 17 die Turbulenzen 24 bilden.

Das Verfahren wird von einen Fahrunterstützungssystem des Fahrzeugs durchgeführt. Das Fahrunterstützungssystem ist ausgeführt, eine Totwinkelüberwachung und/oder eine Spurwechselüberwachung und/oder eine Seitenabstandsüberwachung durchzuführen.

Das Verfahren beginnt in Schritt S100 mit einem Erfassen eines Luftdrucks im Bereich der Ultraschallmembran 17 des Ultraschallsensors 11. Der Luftdruck wird unmittelbar mit dem Ultraschallsensor 11 erfasst.

Nachfolgend werden in Schritt S110 Luftdruckänderungen im Bereich der Ultraschallmembran 17 aus dem in Schritt S100 erfassten Verlauf Luftdrucks im Bereich der Ultraschallmembran 17 über die Zeit ermittelt.

Gemäß Schritt S120 werden sich ergebende Luftdruckänderungen im Bereich der Ultraschallmembran 17 überwacht. Die sich ergebenden Luftdruckänderungen werden als solche ermittelt zur weiteren Verarbeitung.

In Schritt S130 wird eine zyklische Luftdruckänderung in den Luftdruckänderungen identifiziert. Unterschiedliche entsprechende Verfahren können angewendet werden, um zyklische Anteile in den Luftdruckänderungen zu identifizieren, beispielsweise basierend auf einer Frequenzanalyse.

Gemäß Schritt S140 wird eine Bewegungsgeschwindigkeit des Fahrzeugs überwacht. Die Bewegungsgeschwindigkeit wird hier beispielsweise basierend auf Odometriedaten oder Satellitenpositionsdaten, die von dem Fahrzeug empfangen werden, überwacht.

Gemäß Schritt S150 werden zusätzlich Umgebungsbedingungen überwacht. Die Umgebungsbedingungen umfassen beispielsweise eine Umgebungstemperatur, eine Luftfeuchte, Niederschlag und eine Luftdichte. Die Überwachung erfolgt üblicherweise mit entsprechenden Sensoren. Alternativ können die Umgebungsbedingungen zumindest teilweise über eine Kommunikationsverbindung des Fahrzeugs beispielsweise mit einem meteorologischen Dienst empfangen werden, beispielsweise die Umgebungstemperatur oder die Luftfeuchte.

In Schritt S160 erfolgt ein Anpassen einer Erfassung von Objekten mit dem Ultraschallsensor 11 basierend auf der zyklischen Luftdruckänderung und unter zusätzlicher Berücksichtigung der Bewegungsgeschwindigkeit des Fahrzeugs sowie der Umgebungsbedingungen.

Das Anpassen einer Erfassung von Objekten mit dem Ultraschallsensor 11 basierend auf der zyklischen Luftdruckänderung umfasst zunächst ein Filtern der Erfassung von Objekten basierend auf der zyklischen Luftdruckänderung. Sobald eine entsprechende zyklische Luftdruckänderung identifiziert wurde, wird eine Schwelle definiert, sodass empfangene Signale nur einem Objekt zugeordnet werden, wenn ein Signalpegel oberhalb des Schwellwerts erreicht wurde. Der Schwellwert ist hier als adaptive Schwelle ausgeführt, um den Schwellwert abhängig von einer konkreten Form der zyklischen Luftdruckänderung anzupassen.

Es werden außerdem für das Filtern zeitlich variierende Schwellwerte für die Erfassung von Objekten verwendet abhängig von einem Amplituden und/oder Frequenzverlauf der Turbulenzen an dem Ultraschallsensor 11. Bei einem Nulldurchgang der Luftdruckänderung, d.h. wenn der aktuelle Luftdruck einem Mittelwert oder einem Normalwert entspricht, wird der Schwellwert auf ,Null' gesetzt werden, und entsprechend wird der Schwellwert mit einer zunehmenden Luftdruckänderung angepasst. Die zeitlich variierenden Schwellwerte werden unter Berücksichtigung der Bewegungsgeschwindigkeit des Fahrzeugs angewendet.

Beim Filtern der Erfassung von Objekten basierend auf der zyklischen Luftdruckänderung werden zusätzlich Filterparameter parametrisiert. Die Filterparameter betreffen hier einen Frequenzverlauf und einen Pegel.

Das Anpassen einer Erfassung von Objekten mit dem Ultraschallsensor 11 basierend auf der zyklischen Luftdruckänderung umfasst außerdem ein Einstellen eines Sendeverhaltens und eines Empfangsverhaltens des Ultraschallsensors 11 basierend auf der zyklischen Luftdruckänderung. So kann beispielsweise das Sendeverhalten geändert werden, indem Ultraschallpulse zeitlich so terminiert werden, dass sie bei einem Minimum der durch die Turbulenzen hervorgerufenen Störungen abgestrahlt werden. Beim Empfangsverhalten kann eine Anpassung erfolgen, indem durch die Turbulenzen hervorgerufenen Störungen vorhergesagt werden, und die Erfassung der Objekte entsprechend angepasst wird. Dabei können Abstände von erfassten Objekten und Signallaufzeiten der Ultraschallpulse berücksichtigt werden. Es kann eine adaptive Anpassung des zeitlichen Sendeverhaltens wie auch des Empfangsverhaltens erfolgen, d.h. quasi in Echtzeit, um Ultraschallpulse möglichst optimal zu senden und zu empfangen.

### Bezugszeichenliste

- 10: Anordnung
- 11: Ultraschallsensor
- 12: Aussparung
- 13: Verkleidungsteil
- 14: Halter
- 15: Verdickung
- 16: Membrangehäuse
- 17: Ultraschallmembran
- 18: Piezoelement
- 19: Nase
- 20: Öffnung
- 21: Entkopplungsring
- 22: Spalt
- 24: Verwirbelung

## Patentansprüche

1. Verfahren zur Ansteuerung eines Ultraschallsensors (11) für ein Fahrzeug, der in einer Aussparung (12) eines Verkleidungsteils (13) des Fahrzeugs angebracht ist, wobei der Ultraschallsensor (11) eine Ultraschallmembran (17) zum Aussenden und Empfangen von Ultraschallsignalen aufweist, umfassend die Schritte
Überwachen von Luftdruckänderungen im Bereich der Ultraschallmembran (17),
Identifizieren einer zyklischen Luftdruckänderung in den Luftdruckänderungen, und
Anpassen einer Erfassung von Objekten mit dem Ultraschallsensor (11) basierend auf der zyklischen Luftdruckänderung
wobei das Verfahren einen zusätzlichen Schritt zum Überwachen einer Bewegungsgeschwindigkeit des Fahrzeugs umfasst, und
der Schritt des Anpassens einer Erfassung von Objekten mit dem Ultraschallsensor (11) basierend auf der zyklischen Luftdruckänderung unter zusätzlicher Berücksichtigung der Bewegungsgeschwindigkeit des Fahrzeugs erfolgt,
wobei der Schritt des Anpassens einer Erfassung von Objekten mit dem Ultraschallsensor (11) basierend auf der zyklischen Luftdruckänderung ein Einstellen eines Sendeverhaltens und eines Empfangsverhaltens des Ultraschallsensors (11) basierend auf der zyklischen Luftdruckänderung umfasst.

2. Verfahren nach Anspruch 1, **dadurch gekennzeichnet, dass**
der Schritt des Überwachens von Luftdruckänderungen im Bereich der Ultraschallmembran (17) ein Überwachen der Luftdruckänderungen mit dem Ultraschallsensor (11) umfasst.

3. Verfahren nach einem der vorhergehenden Ansprüche 1 oder 2, **dadurch gekennzeichnet, dass**
das Verfahren zusätzliche Schritte zum Erfassen eines Luftdrucks im Bereich der Ultraschallmembran (17) und
zum Ermitteln der Luftdruckänderungen im Bereich der Ultraschallmembran (17) aus einem Verlauf des Luftdrucks im Bereich der Ultraschallmembran (17) umfasst.

4. Verfahren nach einem der vorhergehenden Ansprüche, **dadurch gekennzeichnet, dass**
der Schritt des Anpassens einer Erfassung von Objekten mit dem Ultraschallsensor (11) basierend auf der zyklischen Luftdruckänderung ein Filtern der Erfassung von Objekten basierend auf der zyklischen Luftdruckänderung umfasst.

5. Verfahren nach Anspruch 4, **dadurch gekennzeichnet, dass**
der Schritt des Filterns der Erfassung von Objekten basierend auf der zyklischen Luftdruckänderung ein parametrisieren von Filterparametern umfasst.

6. Verfahren nach Anspruch 4, **dadurch gekennzeichnet, dass**
der Schritt des Filterns der Erfassung von Objekten basierend auf der zyklischen Luftdruckänderung ein Filtern der Erfassung von Objekten mit zeitlich variierenden Schwellwerten für die Erfassung von Objekten umfasst.

7. Verfahren nach einem der vorhergehenden Ansprüche, **dadurch gekennzeichnet, dass**
das Verfahren einen zusätzlichen Schritt zum Überwachen von Umgebungsbedingungen umfasst, und
der Schritt des Anpassens einer Erfassung von Objekten mit dem Ultraschallsensor (11) basierend auf der zyklischen Luftdruckänderung unter zusätzlicher Berücksichtigung der Umgebungsbedingungen erfolgt.

8. Verfahren nach einem der vorhergehenden Ansprüche, **dadurch gekennzeichnet, dass**
das Verfahren zur Ansteuerung eines Ultraschallsensors (11) für ein Fahrzeug eine Ansteuerung des Ultraschallsensors (11) für Hochgeschwindigkeitsfahren umfasst.

9. Fahrunterstützungssystem für ein Fahrzeug mit wenigstens einem Ultraschallsensor (11), wobei das Fahrunterstützungssystem ausgeführt ist, den wenigstens einen Ultraschallsensor (11) gemäß dem Verfahren nach einem der vorhergehenden Ansprüche anzusteuern.

## Claims

1. Method for controlling an ultrasonic sensor (11) for a vehicle, which ultrasonic sensor is attached in a cutout (12) of a trim (13) of the vehicle, wherein the ultrasonic sensor (11) comprises an ultrasound membrane (17) for transmitting and receiving ultrasonic signals, the method comprising the steps of:
monitoring air pressure changes in the region of the ultrasound membrane (17),
identifying a cyclical air pressure change in the air pressure changes, and
adjusting a detection of objects using the ultrasonic sensor (11) on the basis of the cyclical air pressure change,
wherein the method comprises an additional step for monitoring a movement speed of the vehicle, and
the step of adjusting a detection of objects using the ultrasonic sensor (11) on the basis of the cyclical air pressure change is implemented with additional consideration given to the movement speed of the vehicle,
wherein the step of adjusting a detection of objects using the ultrasonic sensor (11) on the basis of the cyclical air pressure change comprises setting a transmission behaviour and a reception behaviour of the ultrasonic sensor (11) on the basis of the cyclical air pressure change.

2. Method according to Claim 1, **characterized in that**
the step of monitoring air pressure changes in the region of the ultrasound membrane (17) comprises a monitoring of the air pressure changes using the ultrasonic sensor (11).

3. Method according to either of preceding Claims 1 and 2, **characterized in that**
the method comprises additional steps for detecting an air pressure in the region of the ultrasound membrane (17) and
for determining the air pressure changes in the region of the ultrasound membrane (17) from an air pressure curve in the region of the ultrasound membrane (17) .

4. Method according to any of the preceding claims, **characterized in that**
the step of adjusting a detection of objects using the ultrasonic sensor (11) on the basis of the cyclical air pressure change comprises a filtering of the detection of objects on the basis of the cyclical air pressure change.

5. Method according to Claim 4, **characterized in that**
the step of filtering the detection of objects on the basis of the cyclical air pressure change comprises a parameterization of filter parameters.

6. Method according to Claim 4, **characterized in that**
the step of filtering the detection of objects on the basis of the cyclical air pressure change comprises a filtering of the detection of objects with time-varying threshold values for the detection of objects.

7. Method according to any of the preceding claims, **characterized in that**
the method comprises an additional step for monitoring ambient conditions, and
the step of adjusting a detection of objects using the ultrasonic sensor (11) on the basis of the cyclical air pressure change is implemented with additional consideration given to the ambient conditions.

8. Method according to any of the preceding claims,
**characterized in that**
the method for controlling an ultrasonic sensor (11) for a vehicle comprises a control of the ultrasonic sensor (11) for high-speed travel.

9. Driver assistance system for a vehicle having at least one ultrasonic sensor (11), wherein the driver assistance system is designed to control the at least one ultrasonic sensor (11) in accordance with the method according to any of the preceding claims.

## Revendications

1. Procédé de commande d'un capteur à ultrasons (11) pour un véhicule, lequel est logé dans une cavité (12) d'une pièce d'habillage (13) du véhicule, le capteur à ultrasons (11) possédant une membrane à ultrasons (17) destinée à émettre et à recevoir des signaux ultrasonores, comprenant les étapes suivantes
surveillance des modifications de la pression de l'air dans la zone de la membrane à ultrasons (17), identification d'une modification cyclique de la pression de l'air dans les modifications de la pression de l'air et
adaptation d'une détection d'objets avec le capteur à ultrasons (11) sur la base de la modification cyclique de la pression de l'air
le procédé comportant une étape supplémentaire de surveillance d'une vitesse de déplacement du véhicule, et
l'étape d'adaptation d'une détection d'objets avec le capteur à ultrasons (11) sur la base de la modification cyclique de la pression de l'air s'effectuant en tenant en plus compte de la vitesse de déplacement du véhicule, l'étape d'adaptation d'une détection d'objets avec le capteur à ultrasons (11) sur la base de la modification cyclique de la pression de l'air comportant un réglage d'un comportement d'émission et d'un comportement de réception du capteur à ultrasons (11) sur la base de la modification cyclique de la pression de l'air.

2. Procédé selon la revendication 1, **caractérisé en ce que** l'étape de surveillance des modifications de la pression de l'air dans la zone de la membrane à ultrasons (17) comprend une surveillance des modifications de la pression de l'air avec le capteur à ultrasons (11).

3. Procédé selon l'une des revendications 1 ou 2, **caractérisé en ce que**
le procédé comprend en plus des étapes de détection d'une pression de l'air dans la zone de la membrane à ultrasons (17) et
de détermination des modifications de la pression de l'air dans la zone de la membrane à ultrasons (17) à partir d'une évolution de la pression de l'air dans la zone de la membrane à ultrasons (17).

4. Procédé selon l'une des revendications précédentes, **caractérisé en ce que**
l'étape d'adaptation d'une détection d'objets avec le capteur à ultrasons (11) sur la base de la modification cyclique de la pression de l'air comportant un filtrage de la détection d'objets sur la base de la modification cyclique de la pression de l'air.

5. Procédé selon la revendication 4, **caractérisé en ce que**
l'étape de filtrage de la détection d'objets sur la base de la modification cyclique de la pression de l'air comprenant un paramétrage de paramètres de filtrage.

6. Procédé selon la revendication 4, **caractérisé en ce que**
l'étape de filtrage de la détection d'objets sur la base de la modification cyclique de la pression de l'air comprenant la détection d'objets avec des valeurs de seuil variant dans le temps pour la détection d'objets.

7. Procédé selon l'une des revendications précédentes, **caractérisé en ce que**
le procédé comprend une étape supplémentaire de surveillance des conditions environnantes et
l'étape d'adaptation d'une détection d'objets avec le capteur à ultrasons (11) sur la base de la modification cyclique de la pression de l'air s'effectuant en tenant en plus compte des conditions environnantes.

8. Procédé selon l'une des revendications précédentes, **caractérisé en ce que**
le procédé de commande d'un capteur à ultrasons (11) pour un véhicule comprend une commande du capteur à ultrasons (11) pour des déplacements à grande vitesse.

9. Système d'assistance à la conduite pour un véhicule comprenant au moins un capteur à ultrasons (11), le système d'assistance à la conduite étant réalisé pour commander l'au moins un capteur à ultrasons (11) conformément au procédé selon l'une des revendications précédentes.
